# EUROPÄISCHE PATENTSCHRIFT

(11) **EP 3 364 067 B1**
(45) Veröffentlichungstag und Bekanntmachung des Hinweises auf die Patenterteilung: **10.12.2025**
(21) Anmeldenummer: 18154809.0
(22) Anmeldetag: 02.02.2018
(51) Int. Cl.: F16F 9/04, F16F 9/05

(54) **FEDERSYSTEM MIT VERSCHLIESSBAREM ABROLLSTEMPELRAUM**
SPRING SYSTEM HAVING A CLOSABLE ROLLER STAMP AREA
SYSTÈME DE RESSORT POURVU D'ESPACE D'OUTILLAGE À ROULER POUVANT ÊTRE FERMÉ

(30) Priorität: 18.02.2017 DE 102017001610
(43) Veröffentlichungstag der Anmeldung: 22.08.2018
(73) Patentinhaber: MAN Truck & Bus SE, 80995 München (DE)
(72) Erfinder: Hofstetter, Thomas, 84048 Mainburg (DE); Karacan, Sertac, 80637 München (DE)
(74) Vertreter: v. Bezold & Partner Patentanwälte - PartG mbB

(56) Entgegenhaltungen:
- EP-A2- 2 310 716
- CN-A- 101 469 754
- DE-A1- 10 319 568
- DE-A1- 102009 002 617
- DE-A1- 4 327 585

## Beschreibung

Die Erfindung betrifft ein Federsystem für ein Kraftfahrzeug, vorzugsweise zur Erzeugung eines Absenk-Vorgangs des Kraftfahrzeugs.

Dokument CN 101 469 754 A offenbart eine Luftfederung, umfassend einen elastischen Balg, ein plattenförmiges Element, das mit einem Endabschnitt des Balgs verbunden ist, und einen Abrollkolben, der an dem anderen Endabschnitt des Balgs ausgebildet ist. Ein Stopper aus elastischem Material ist ausgebildet, das plattenförmige Element und den Kolben daran zu hindern, sich einander um einen vorbestimmten Betrag oder mehr zu nähern.

Dokument DE 103 19 568 A1 offenbart eine Luftfeder für ein Kraftfahrzeug, mit einem von einem Luftfederbalg umschlossenen Luftvolumen, einem Abrollkolben und einem abschaltbaren Zusatzvolumen, welches in einem Hohlraum im Abrollkolben angeordnet ist. Das Zusatzvolumen wird nach einem bestimmten Einfederweg durch eine mit einem gasdichtem Dichtungssitz auf einer Kontaktfläche aufsitzenden Dichtung vom Luftvolumen des Luftfederbalges vollständig getrennt.

Dokument EP 2 310 716 A2 offenbart eine Gasfeder- und Gasdämpferanordnung, die zwei Endglieder und eine flexible Wand, die zumindest teilweise eine erste Federkammer dazwischen definiert, umfasst. Eine Dämpfungskammerwand begrenzt zumindest teilweise eine Dämpfungskammer, in der ein Dämpferkolben aufgenommen und funktionsfähig zwischen den zwei Endgliedern und innerhalb der ersten Federkammer verbunden ist.

Dokument DE 43 27 585 A1 offenbart eine Luftfeder mit einem elastomeren Rollbalg, dessen Enden luftdicht an je einem Anschlussteil befestigt sind, von denen eines als Abrollkolben ausgebildet ist. Der Abrollkolben ist hohl ausgebildet und stellt eine mit dem Balginneren verbundene Zusatzluftkammer dar. In einer Öffnung der dem Balginneren zugeordneten Stirnwand des Abrollkolbens ist ein doppelt wirkendes Verschlussteil angeordnet, das mit einer Druckfeder verbunden ist, die sich gegen das andere Anschlussteil abstützt.

Dokument DE 10 2009 002 617 A1 offenbart eine Luftfeder mit Dämpfungsfunktion, umfassend einen Abrollkörper, an dem mit einem ersten Ende ein Rollbalg verbunden ist. Ein Federraum und ein Zusatzraum innerhalb des Abrollkörpers sind von einer Zwischenscheibe unterteilt. In der Zwischenscheibe ist mindestens ein Dämpfventil angeordnet, wobei die Zwischenscheibe von einem Boden des Abrollkörpers gebildet wird und in der Zwischenscheibe eine Fixierung für einen Dämpfventilkörper ausgeführt ist.

Aus der Praxis sind bereits Federsysteme für Kraftfahrzeuge, insbesondere Omnibusse, zur Erzeugung eines Kneeling-Vorgangs der Omnibusse bekannt. "Kneeling" bezeichnet ein Absenken des Omnibusses auf dessen Einstiegsseite, um so Personen das Einsteigen in den Omnibus zu erleichtern. Dazu werden üblicherweise Luftfederbälge auf der Einstiegsseite solange entlüftet, bis das Niveau des Omnibusses auf der Einstiegsseite ein eingestelltes Maß erreicht. Nach Schließen der Einstiegstüren wird der Omnibus dann üblicherweise automatisch durch Aufpumpen der Luftfederbälge wieder auf Normalniveau angehoben. Derartige Federsysteme umfassen meist einen Federbalg, der einen mit einem Gasvolumen gefüllten Federraum umschließt, und einen Abrollstempel für den Federbalg, wobei der Abrollstempel einen mit einem Gasvolumen gefüllten Abrollstempelraum umschließt. Obwohl derartige Federsysteme in der Praxis üblicherweise gut funktionieren, ist deren Federungsverhalten verbesserungsfähig.

Eine Aufgabe der Erfindung ist es, ein Federsystem für ein Kraftfahrzeug zur Erzielung eines Absenk-Vorgangs des Kraftfahrzeugs mit verbessertem Federungsverhalten zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft ein Federsystem für ein Kraftfahrzeug, vorzugsweise zur Erzeugung eines Absenk-Vorgangs des Kraftfahrzeugs, insbesondere eines Kneeling-Vorgangs des Kraftfahrzeugs.

Das Kraftfahrzeug ist vorzugsweise ein Nutzfahrzeug, z. B. ein Omnibus oder ein Lastkraftwagen. Das Federsystem umfasst einen Federbalg (z. B. Roll- oder Faltenbalg), der einen mit einem Gasvolumen gefüllten Federraum umschließt, und einen Abrollstempel für den Federbalg, der einen mit einem Gasvolumen gefüllten Abrollstempelraum umschließt.

Das Federsystem zeichnet sich insbesondere dadurch aus, dass es zumindest eine Verbindung zum Verbinden des Federraums und des Abrollstempelraums umfasst, über die zweckmäßig ein Gaswechsel zwischen dem Federraum und dem Abrollstempelraum ermöglicht werden kann, und darüber hinaus zumindest ein Schließelement zum Öffnen und zum Schließen der Verbindung umfasst, so dass z. B. bei einem Absenken des Kraftfahrzeugs durch das Schließen der Verbindung das Gasvolumen des Abrollstempelraums zwar vorzugsweise teilweise, aber nicht vollständig entlüftet wird, insbesondere nicht vollständig in den Abrollstempelraum entlüftet wird.

Dadurch können einer oder mehrere der folgenden Vorteile erzielt werden:
- Eine Verbindung der Gasvolumina ermöglicht ein komfortableres Federungsverhalten,
- Mittels Schließen/Öffnen der Verbindung kann die Federrate bzw. Eigenfrequenz des Federsystems, insbesondere der Luftfeder, geändert werden. Damit können andere Federungsverhalten für das Kraftfahrzeug erzielt werden. Das Federungsverhalten kann je nach Wunsch ausgelegt werden.
- Beim Absenken kann die Verbindung durch ein zweckmäßig pufferndes Schließelement verschlossen werden und der letzte Druck im Abrollstempel kann erhalten bleiben (gespeichert),
- Beim Absenken ist nur das Gasvolumen im Federbalg entleerbar,
- Beim Anheben kann der Druck im Federbalg erhöht und die Verbindung wieder freigegeben werden,
- Der ausströmende Druck vom Abrollstempel in den Federbalg kann das Anheben unterstützen und muss nicht extra erzeugt werden (Energieeinsparung),
- Ein schnelles Anheben des Kraftfahrzeugs nach dem Absenk-Vorgang wird ermöglicht, und/oder
- Ein gutes Federverhalten während der Fahrt des Kraftfahrzeugs wird ermöglicht.

Das Federsystem umfasst einen in dem Federraum angeordneten Puffer zur Beeinflussung des Federverhaltens des Federsystems, zur Erzielung einer progressiven Kennlinie des Federsystems. Der Puffer kann somit insbesondere alleine das Federverhalten des Kraftfahrzeugs mit einer progressiven Kennlinie beeinflussen.

Der Puffer kann vorzugsweise aus einem elastischen Material hergestellt sein.

In einem eingefederten Zustand kann der Puffer zweckmäßig stirnseitig an dem Abrollstempel anliegen.

In einem ausgefederten Zustand kann der Puffer vorzugsweise von dem Abrollstempel zweckmäßig stirnseitig beabstandet sein.

Es ist möglich, dass das Schließelement als Puffer ausgebildet.

Es ist möglich, dass das Schließelement und/oder der Puffer an dem Federbalg montiert ist, um sich mit dem Federbalg mitzubewegen.

Das Schließelement und/oder der Puffer dienen zur vorzugsweise puffernden Begrenzung des Federwegs zwischen dem Federbalg und dem Abrollstempel.

Die Verbindung kann (in einem nicht beanspruchtem Beispiel) z. B. eine Öffnung (z. B. eine Bohrung) in einer oberen Wand des Abrollstempels umfassen, wobei die Wand vorzugsweise innerhalb des Federraums angeordnet sein kann.

Die Verbindung umfasst eine Leitung (z. B. ein Rohr, einen Schlauch, einen Kanal, etc.), um den Federraum und den Abrollstempelraum von außen miteinander zu verbinden, optional so dass z. B. die Leitung außerhalb des Federraums und/oder außerhalb des Abrollstempelraums verlaufen kann.

Es ist möglich, dass das Schließelement ein Stellelement, vorzugsweise ein Ventil, zum Öffnen und zum Schließen der Verbindung aufweist und ein insbesondere elektronisches Steuersystem zur Steuerung (zweckmäßig Steuerung oder Regelung) des Stellelements vorgesehen ist. Das Öffnen und Schließen der Verbindung kann somit zweckmäßig durch ein Steuersystem und folglich intelligent erfolgen.

Das Stellelement kann z. B. außerhalb des Federraums und/oder außerhalb des Abrollstempelraums angeordnet sein. Das Stellelement kann allerdings auch innerhalb des Abrollstempelraums angeordnet sein.

Das Stellelement kann insbesondere an oder in der Leitung angeordnet sein, um die Leitung zu öffnen und zu schließen.

Das Stellelement kann allerdings auch an dem Abrollstempel, z. B. im Abrollstempelraum, montiert sein, um die Verbindung, insbesondere die Öffnung in der oberen Wand des Abrollstempels, zu öffnen und zu schließen.

Das Steuersystem kann z. B. eine Fahrwerksregelung für das Kraftfahrzeug umfassen.

Es ist möglich, dass im Fahrzustand des Kraftfahrzeugs die Verbindung geöffnet ist und/oder beim Anheben des Kraftfahrzeugs die Verbindung durch das Schließelement wieder geöffnet wird, vorzugsweise so, dass ein unter Druck stehendes Gasvolumen im Abrollstempelraum über die Verbindung in den Federraum führbar ist.

Es ist möglich, dass durch Schließen der Verbindung (zweckmäßig mit Schließelement/Puffer) eine progressive und/oder durch Öffnen der Verbindung (zweckmäßig mit Schließelement/Puffer) eine regressive Kennlinie des Federsystems erzielt wird, insbesondere mittels Verkleinerung und/oder Vergrößerung des beim Ein- und/oder Ausfedern komprimierten Gasvolumens.

Zu erwähnen ist, dass der Puffer alleine das Federverhalten des Kraftfahrzeugs mit einer progressiven Kennlinie beeinflussen kann, aber durch Schließen der Verbindung (zweckmäßig mit Schließelement/Puffer) eine progressive Federkennlinie erzeugbar ist, indem das Gasvolumen verkleinerbar ist, das beim Einfedern/Ausfedern komprimiert wird.

Das Volumen kann zweckmäßig mittels des Schließelements verkleinert oder vergrößert werden. Somit ist eine progressive und regressive Wirkung möglich.

Das hierin erwähnte Gas ist vorzugsweise Luft.

Der Abrollstempel dient vorzugsweise zur Befestigung an einer Achse des Kraftfahrzeugs.

Der Federbalg dient vorzugsweise zur Befestigung an einem Chassis (z. B. Tragrahmen) des Kraftfahrzeugs.

Der Federbalg dient zweckmäßig zum Abrollen an dem Abrollstempel.

Der Absenk-Vorgang umfasst insbesondere ein Absenken des Kraftfahrzeugs auf dessen Einstiegsseite, um so Personen ein Ein- und Aussteigen zu erleichtern. Der Absenk-Vorgang betrifft somit vorzugsweise ein sogenanntes "Kneeling".

Die Erfindung umfasst außerdem ein Kraftfahrzeug, vorzugsweise ein Lastkraftwagen oder Omnibus, mit einem Federsystem wie hierin offenbart.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Ansicht eines Federsystems in einem ausgefederten Zustand gemäß einem nicht erfindungsgemäßen Beispiel,
- Figur 2: zeigt eine Ansicht des in der Figur 1 veranschaulichten Federsystems in einem eingefederten Zustand,
- Figur 3: zeigt eine Ansicht eines Federsystems in einem ausgefederten Zustand gemäß einer anderen Ausführungsform der Erfindung, und
- Figur 4: zeigt eine Ansicht eines Federsystems in einem eingefederten Zustand gemäß einem nicht erfindungsgemäßen Beispiel.

Die in den Figuren gezeigten Ausführungsformen stimmen teilweise überein, so dass ähnliche oder identische Teile mit den gleichen Bezugszeichen versehen sind und zu deren Erläuterung auch auf die Beschreibung der anderen Ausführungsformen verwiesen wird, um Wiederholungen zu vermeiden.

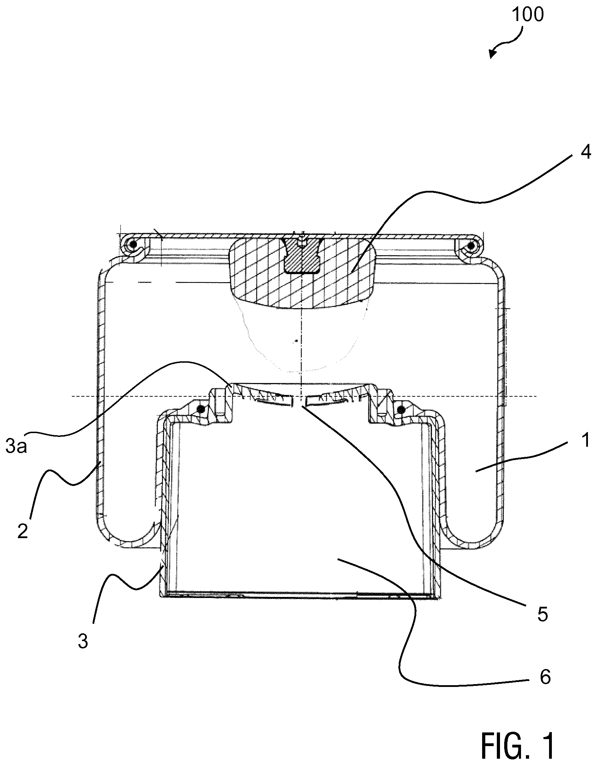

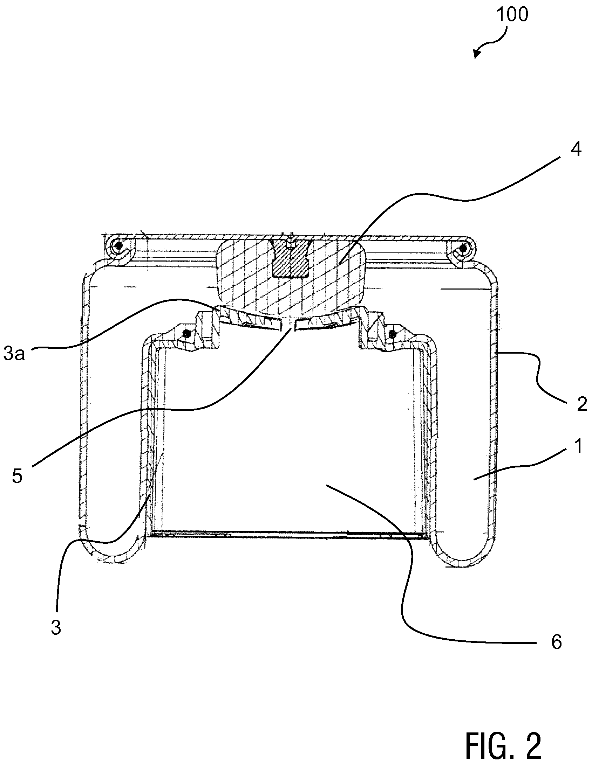

Die Figuren 1 und 2 zeigen ein Federsystem 100 für ein Kraftfahrzeug gemäß einer Ausführungsform der Erfindung. Das Federsystem 100 ist insbesondere zur Realisierung eines Absenk-/Kneeling-Vorgangs auf der Einstiegsseite des Kraftfahrzeugs ausgeführt, um Personen ein Ein- und Aussteigen aus dem Kraftfahrzeug zu erleichtern. Das Kraftfahrzeug ist vorzugsweise ein Omnibus.

Figur 1 zeigt das Federsystem 100 in einem ausgefederten Zustand, während Figur 2 das Federsystem 100 in einem eingefederten Zustand zeigt, z. B. in einem Absenk-/Kneeling-Zustand. Das Federsystem 100 wird nachfolgend unter gemeinsamer Bezugnahme auf die Figuren 1 und 2 beschrieben.

Das Federsystem 100 umfasst einen Federbalg (z. B. Faltenbalg) 2, der einen mit einem Gasvolumen gefüllten Federraum 1 umschließt, und einen Abrollstempel 3, der einen mit einem Gasvolumen gefüllten Abrollstempelraum 6 umschließt. Während eines Federvorgangs des Federsystems 100 kann der Federbalg 2 an dem Abrollstempel 3 abrollen.

Der Abrollstempel 3 dient zur Befestigung an einer Achse des Kraftfahrzeugs, während der Federbalg 2 zur Befestigung an einem Chassis (z. B. Tragrahmen) des Kraftfahrzeugs dient.

Das Federsystem 100 umfasst darüber hinaus eine Verbindung 5 zum Verbinden des Federraums 1 und des Abrollstempelraums 6. Über die Verbindung 5 kann ein zweckmäßiger Gaswechsel zwischen dem Federraum 1 und dem Abrollstempelraum 6 ermöglicht werden. Die Verbindung 5 ist als Öffnung (z. B. Bohrung) ausgeführt. Die Öffnung 5 ist in einer oberen Wand 3a des Abrollstempels 3 angeordnet. Die Wand 3a ist innerhalb des Federraums 1 positioniert.

Ein Schließelement 4 dient zum Öffnen und zum Schließen der Verbindung 5, so dass bei einem Absenken/Kneeling des Kraftfahrzeugs durch das Schließen der Verbindung 5 das Gasvolumen des Abrollstempelraums 6 teilweise, aber nicht vollständig entlüftet wird. Das Schließelement 4 liegt in einem eingefederten Zustand stirnseitig an dem Abrollstempel 3 an und ist in einem ausgefederten Zustand von dem Abrollstempel 3 stirnseitig beabstandet.

Das Schließelement 4 ist zusätzlich als Puffer ausgebildet, insbesondere aus einem elastischen Material hergestellt, vorzugsweise so, dass durch die Pufferwirkung eine progressive Kennlinie des Federsystems 100 realisiert werden kann. Das Schließelement 4 dient somit zur puffernden Begrenzung des Federwegs zwischen dem Federbalg 2 und dem Abrollstempel 3.

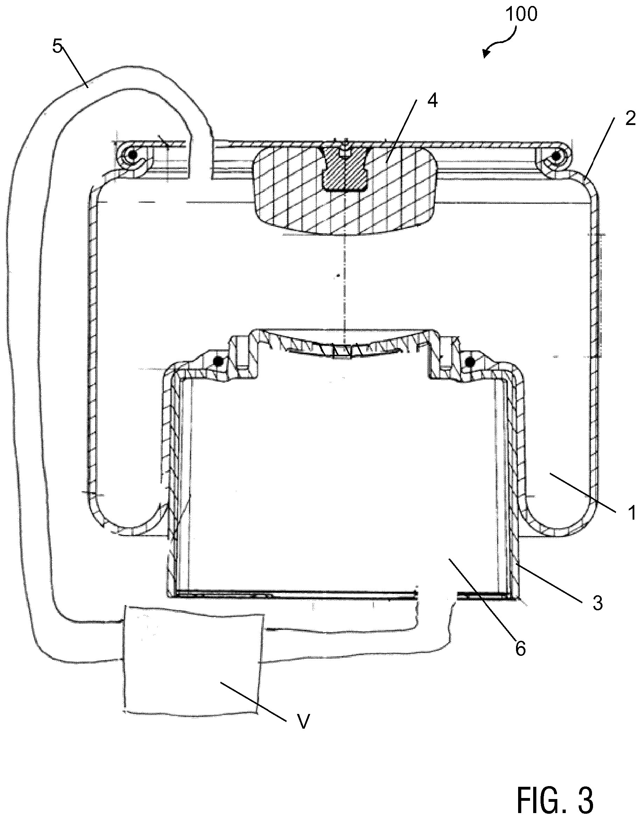

Figur 3 zeigt eine Ansicht eines Federsystems 100 in einem ausgefederten Zustand gemäß einer anderen Ausführungsform der Erfindung.

Eine Besonderheit der in Figur 3 gezeigten Ausführungsform ist, dass die Verbindung 5 nicht als Öffnung in der oberen Wand des Abrollstempels ausgeführt ist, sondern eine Leitung umfasst, um den Federraum 1 und den Abrollstempelraum 6 von außen miteinander zu verbinden. Eine weitere Besonderheit ist, dass die Verbindung 5 durch ein als Ventil ausgeführtes Stellelement V geöffnet und geschlossen werden kann, so dass das Stellelement V als Schließelement dient.

Das Stellelement V steht mit einem (nicht gezeigten) elektronischen Steuersystem zur Steuerung des Stellelements V (z. B. eine Fahrwerkregelung) in Verbindung, so dass das Öffnen und Schließen der Verbindung 5 gesteuert und somit intelligent erfolgen kann. Das Stellelement V ist zweckmäßig außerhalb des Federraums 1 und außerhalb des Abrollstellstempelraums 6 angeordnet.

Bezugszeichen 4 kennzeichnet erneut einen Puffer 4 zur Beeinflussung des Federverhaltens des Federsystems 100, vorzugsweise zur Erzielung einer progressiven Kennlinie des Federsystems 100. Der in Figur 3 gezeigte Puffer 4 dient im Gegensatz zur Ausführungsform der Figuren 1 und 2 allerdings nicht als Schließelement.

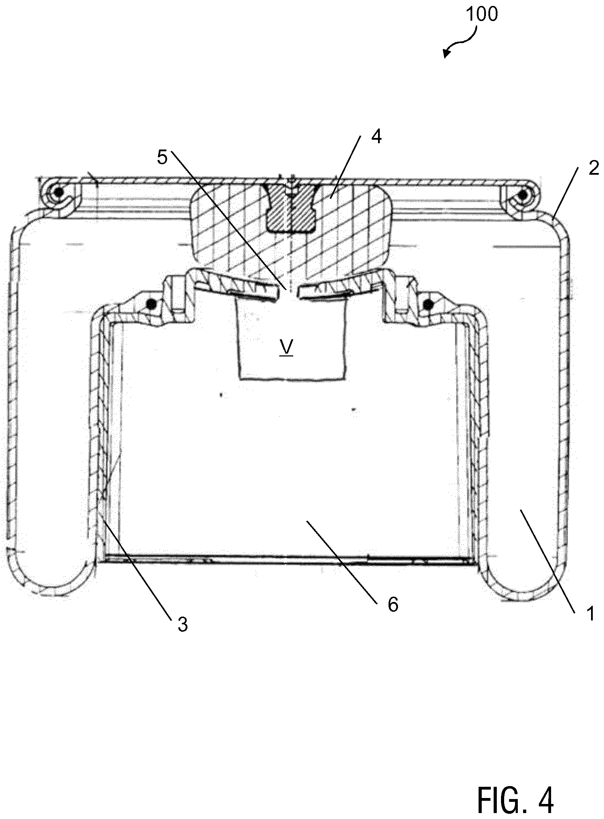

Figur 4 zeigt eine Ansicht eines Federsystems 100 in einem eingefederten Zustand gemäß einem nicht erfindungsgemäßen Beispiel. Die in Figur 4 gezeigte Ausführungsform entspricht zum Großteil der in den Figuren 1 und 2 gezeigten Ausführungsform.

Eine Besonderheit ist aber, dass die Verbindung 5, zusätzlich zu dem optionalen Schließelement 4, durch ein als Ventil ausgeführtes Stellelement V geöffnet und geschlossen werden kann, so dass wiederum das Stellelement V als Schließelement dient.

Das Stellelement V steht mit einem (nicht gezeigten) elektronischen Steuersystem zur Steuerung des Stellelements V (z. B. eine Fahrwerkregelung) in Verbindung, so dass das Öffnen und Schließen der Verbindung 5 gesteuert und somit intelligent erfolgen kann. Das Stellelement V ist zweckmäßig innerhalb des Abrollstellstempelraums 6 angeordnet.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Federraum
- 2: Federbalg, z. B. Roll- oder Faltenbalg
- 3: Abrollstempel
- 3a: Wand des Abrollstempels
- 4: Schließelement und/oder Puffer
- 5: Verbindung, insbesondere Öffnung oder Leitung
- 6: Abrollstempelraum
- V: Stellelement, insbesondere Ventil
- 100: Federsystem

## Patentansprüche

1. Federsystem (100) für ein Kraftfahrzeug, vorzugsweise zur Erzeugung eines Absenk-vorgangs des Kraftfahrzeugs, umfassend:
einen Federbalg (2), der einen mit einem Gasvolumen gefüllten Federraum (1) umschließt, und
einen Abrollstempel (3) für den Federbalg (2), wobei der Abrollstempel (3) einen mit einem Gasvolumen gefüllten Abrollstempelraum (6) umschließt,
wobei das Federsystem (100) zumindest eine Verbindung (5) zum Verbinden des Federraums (1) und des Abrollstempelraums (6) umfasst und zumindest ein Schließelement (4, V) zum Öffnen und zum Schließen der Verbindung (5) umfasst, so dass bei einem Absenken des Kraftfahrzeugs durch das Schließen der Verbindung (5) das Gasvolumen des Abrollstempelraums (6) nicht vollständig entlüftet wird, wobei das Federsystem (100) einen in dem Federraum (1) angeordneten Puffer (4) zur Beeinflussung des Federverhaltens des Federsystems (100) umfasst, zur Erzielung einer progressiven Kennlinie des Federsystems (100), **dadurch gekennzeichnet, dass** die Verbindung (5) eine Leitung umfasst, um den Federraum (1) und den Abrollstempelraum (6) von außen miteinander zu verbinden.

2. Federsystem (100) nach Anspruch 1, **dadurch gekennzeichnet, dass** der Puffer (4) in einem eingefederten Zustand an dem Abrollstempel (3) anliegt und in einem ausgefederten Zustand von dem Abrollstempel (3) beabstandet ist.

3. Federsystem (100) nach einem der vorhergehenden Ansprüche, **dadurch gekennzeichnet, dass** das Schließelement (4) als Puffer (4) ausgebildet ist.

4. Federsystem (100) nach einem der vorhergehenden Ansprüche, **dadurch gekennzeichnet, dass** das Schließelement (4) und/oder der Puffer (4) an dem Federbalg (2) montiert ist, um sich mit dem Federbalg (2) mitzubewegen.

5. Federsystem (100) nach einem der vorhergehenden Ansprüche, **dadurch gekennzeichnet, dass** das Schließelement (4) und/oder der Puffer (4) zur puffernden Begrenzung des Federwegs zwischen dem Federbalg (2) und dem Abrollstempel (3) dient.

6. Federsystem (100) nach einem der vorhergehenden Ansprüche, **dadurch gekennzeichnet, dass** das Schließelement (4, V) ein Stellelement (V), vorzugsweise ein Ventil, zum Öffnen und zum Schließen der Verbindung (5) umfasst und ein insbesondere elektronisches Steuersystem zur Steuerung des Stellelements (V) vorgesehen ist.

7. Federsystem (100) nach Anspruch 6, **dadurch gekennzeichnet, dass** das Stellelement (V) außerhalb des Federraums (1) und/oder außerhalb des Abrollstellstempelraums (6) angeordnet ist.

8. Federsystem (100) nach Anspruch 6, **dadurch gekennzeichnet, dass** das Stellelement (V) innerhalb des Abrollstellstempelraums (6) angeordnet ist.

9. Federsystem (100) nach einem der Ansprüche 6 bis 7, **dadurch gekennzeichnet, dass** das Stellelement (V) an oder in der Leitung angeordnet ist, um die Leitung zu öffnen und zu schließen, oder an dem Abrollstempel (3) montiert ist, um die Verbindung (5) zu öffnen und zu schließen.

10. Federsystem (100) nach einem der Ansprüche 6 bis 9, **dadurch gekennzeichnet, dass** das Steuersystem eine Fahrwerksregelung für das Kraftfahrzeug umfasst.

11. Federsystem (100) nach einem der vorhergehenden Ansprüche, **dadurch gekennzeichnet, dass** im Fahrzustand des Kraftfahrzeugs die Verbindung (5) geöffnet ist und/oder beim Anheben des Kraftfahrzeugs die Öffnung (5) durch das Schließelement (4) geöffnet wird, vorzugsweise so, dass in dem Abrollstempelraum (6) gespeichertes und unter Druck stehendes Gasvolumen in den Federraum (1) über die Öffnung (5) zuführbar ist.

12. Federsystem (100) nach einem der vorhergehenden Ansprüche, **dadurch gekennzeichnet, dass** durch Schließen der Verbindung (5) eine progressive oder durch Öffnen der Verbindung (5) eine regressive Kennlinie des Federsystems (100) erzielt wird, mittels Verkleinerung oder Vergrößerung des beim Ein- oder Ausfedern komprimierten Gasvolumens.

13. Kraftfahrzeug, vorzugsweise Lastkraftwagen oder Omnibus, mit einem Federsystem (100) nach einem der vorhergehenden Ansprüche.

## Claims

1. Spring system (100) for a motor vehicle, preferably for generating a lowering process of the motor vehicle, comprising:
a spring bellows (2) enclosing a spring chamber (1) filled with a gas volume, and
a rolling stamp (3) for the spring bellows (2), wherein the rolling stamp (3) encloses a rolling stamp chamber (6) filled with a gas volume,
wherein the spring system (100) comprises at least one connection (5) for connecting the spring chamber (1) and the rolling stamp chamber (6) and at least one closing element (4, V) for opening and closing the connection (5), such when lowering the motor vehicle by means of the closing of the connection (5), the gas volume of the rolling stamp chamber (6) is not completely vented, wherein the spring system (100) comprises a buffer (4) arranged in the spring chamber (1) for influencing the spring behavior of the spring system (100) in order to achieve a progressive characteristic curve of the spring system (100), **characterized in that** the connection (5) comprises a conduit for connecting the spring chamber (1) and the rolling stamp chamber (6) to each other from outside.

2. Spring system (100) according to claim 1, **characterized in that** the buffer (4) rests against the rolling stamp (3) in a compressed state and is spaced apart from the rolling stamp (3) in an extended state.

3. Spring system (100) according to one of the preceding claims, **characterized in that** the closing element (4) is designed as a buffer (4).

4. Spring system (100) according to one of the preceding claims, **characterized in that** the closing element (4) and/or the buffer (4) is mounted on the spring bellows (2) in order to move with the spring bellows (2).

5. Spring system (100) according to one of the preceding claims, **characterized in that** the closing element (4) and/or the buffer (4) serves for a buffering limitation of the spring travel between the spring bellows (2) and the rolling stamp (3).

6. Spring system (100) according to one of the preceding claims, **characterized in that** the closing element (4, V) comprises an actuating element (V), preferably a valve, for opening and closing the connection (5), and an in particular electronic control system in particular is provided for controlling the actuating element (V).

7. Spring system (100) according to claim 6, **characterized in that** the actuating element (V) is arranged outside the spring chamber (1) and/or outside the rolling stamp actuating chamber (6).

8. Spring system (100) according to claim 6, **characterized in that** the actuating element (V) is arranged inside the rolling stamp actuating chamber (6).

9. Spring system (100) according to one of claims 6 to 7, **characterized in that** the actuating element (V) is arranged on or in the conduit in order to open and close the conduit, or is mounted on the rolling stamp (3) in order to open and close the connection (5).

10. Spring system (100) according to one of claims 6 to 9, **characterized in that** the control system comprises a chassis control system for the motor vehicle.

11. Spring system (100) according to one of the preceding claims, **characterized in that**, in a drive condition of the motor vehicle is in motion, the connection (5) is open and/or, when lifting of the motor vehicle, the opening (5) is opened by the closing element (4), preferably such that the gas volume stored under pressure in the rolling stamp chamber (6) can be fed into the spring chamber (1) via the opening (5).

12. Spring system (100) according to one of the preceding claims, **characterized in that** closing the connection (5) results in a progressive or opening the connection (5) results in a regressive characteristic curve of the spring system (100) by means of reducing or increasing the gas volume compressed during compression or rebound.

13. Motor vehicle, preferably a truck or bus, having a spring system (100) according to one of the preceding claims.

## Revendications

1. Système de suspension (100) pour un véhicule automobile, de préférence pour générer un mouvement d'abaissement du véhicule automobile, comprenant :
un soufflet (2) qui entoure une chambre de suspension (1) remplie d'un volume de gaz, et
un piston roulant (3) pour le soufflet (2), le piston roulant (3) entourant une chambre de piston roulant (6) remplie d'un volume de gaz,
le système de suspension (100) comprenant au moins une liaison (5) pour relier la chambre de suspension (1) et la chambre de piston roulant (6) et comprenant au moins un élément de fermeture (4, V) pour ouvrir et fermer la liaison (5), de telle sorte que, lors d'un abaissement du véhicule automobile, le volume de gaz de la chambre de piston roulant (6) n'est pas complètement purgé par la fermeture de la liaison (5), le système de suspension (100) comprenant un tampon (4) agencé dans la chambre de suspension (1) pour influencer le comportement de suspension du système de suspension (100), afin d'obtenir une courbe caractéristique progressive du système de suspension (100), **caractérisé en ce que** la liaison (5) comprend une conduite pour relier entre eux, depuis l'extérieur, la chambre de suspension (1) et la chambre de piston roulant (6).

2. Système de suspension (100) selon la revendication 1, **caractérisé en ce que** le tampon (4) s'applique contre le piston roulant (3) dans un état comprimé et est espacé du piston roulant (3) dans un état détendu.

3. Système de suspension (100) selon l'une quelconque des revendications précédentes, **caractérisé en ce que** l'élément de fermeture (4) est réalisé sous forme de tampon (4).

4. Système de suspension (100) selon l'une quelconque des revendications précédentes, **caractérisé en ce que** l'élément de fermeture (4) et/ou le tampon (4) est monté sur le soufflet (2) afin de se déplacer avec le soufflet (2).

5. Système de suspension (100) selon l'une quelconque des revendications précédentes, **caractérisé en ce que** l'élément de fermeture (4) et/ou le tampon (4) sert à limiter de manière amortie la course de suspension entre le soufflet (2) et le piston roulant (3).

6. Système de suspension (100) selon l'une quelconque des revendications précédentes, **caractérisé en ce que** l'élément de fermeture (4, V) comprend un élément de réglage (V), de préférence une soupape, pour ouvrir et fermer la liaison (5), et un système de commande, notamment électronique, est prévu pour commander l'élément de réglage (V).

7. Système de suspension (100) selon la revendication 6, **caractérisé en ce que** l'élément de réglage (V) est agencé à l'extérieur de la chambre de suspension (1) et/ou à l'extérieur de la chambre de piston roulant (6).

8. Système de suspension (100) selon la revendication 6, **caractérisé en ce que** l'élément de réglage (V) est agencé à l'intérieur de la chambre de piston roulant (6).

9. Système de suspension (100) selon l'une quelconque des revendications 6 à 7, **caractérisé en ce que** l'élément de réglage (V) est agencé sur ou dans la conduite afin d'ouvrir et de fermer la conduite, ou est monté sur le piston roulant (3) afin d'ouvrir et de fermer la liaison (5).

10. Système de suspension (100) selon l'une quelconque des revendications 6 à 9, **caractérisé en ce que** le système de commande comprend une régulation du châssis pour le véhicule automobile.

11. Système de suspension (100) selon l'une quelconque des revendications précédentes, **caractérisé en ce qu'**à l'état de conduite du véhicule automobile, la liaison (5) est ouverte et/ou, lors du soulèvement du véhicule automobile, l'ouverture (5) est ouverte par l'élément de fermeture (4), de préférence de telle sorte que le volume de gaz stocké dans la chambre du piston roulant (6) et sous pression puisse être acheminé dans la chambre de suspension (1) via l'ouverture (5).

12. Système de suspension (100) selon l'une quelconque des revendications précédentes, **caractérisé en ce que** la fermeture de la liaison (5) permet d'obtenir une courbe caractéristique progressive du système de suspension (100) et l'ouverture de la liaison (5) une courbe caractéristique régressive, au moyen de la réduction ou de l'augmentation du volume de gaz comprimé lors de la compression ou de la détente.

13. Véhicule automobile, de préférence camion ou autobus, avec un système de suspension (100) selon l'une quelconque des revendications précédentes.
